# EUROPÄISCHE PATENTSCHRIFT

(11) **EP 1 396 899 B1**
(45) Veröffentlichungstag und Bekanntmachung des Hinweises auf die Patenterteilung: **23.03.2011**
(21) Anmeldenummer: 03019325.4
(22) Anmeldetag: 27.08.2003
(51) Int. Cl.: H01M 12/02, H01M 12/06, H01M 2/04

(54) **Gasentwicklungszelle oder Batterie und Verfahren zu deren Herstellung**
Gas generating cell or battery and method for manufacturing the same
Cellule de génération de gas ou batterie et sa méthode de fabrication

(30) Priorität: 07.09.2002 DE 10241502
(43) Veröffentlichungstag der Anmeldung: 10.03.2004
(73) Patentinhaber: GCT Gas-Cell-Tec AG, 3360 Herzogenbuchsee (CH)
(72) Erfinder: Sauer, Hans, 65510 Idstein (DE)
(74) Vertreter: Specht, Peter

(56) Entgegenhaltungen:
- WO-A-99/63605
- GB-A- 1 426 510
- US-A- 2 538 078
- US-A- 4 988 581

## Beschreibung

Die Erfindung betrifft eine Gasentwicklungszelle nach dem Oberbegriff des Anspruchs 1 und ein Verfahren nach dem Oberbegriff des Anspruchs 7.

Eine gattungsgemäße Batterie ist aus der GB 1178859 bekannt. Zum Stand der Technik wird ferner dic WO99/63605 genannt, die eine vormontierbare Einheit aus Deckel, Dichtring, Kathode und Separator offenbart.

Eine Wasserstoffentwicklungszelle ist aus der DE 35 32 335 C2 bekannt. Diese Wasserstoffentwicklungszelle weist eine Zinkanode, eine Wasserstoffkathode und einen alkalischen Elektrolyten auf, wobei die Kathode aus einer PTFE-gebundenen Metallund/oder Kohlepulversehicht besteht, die in ein Metallnetz als Stromableiter eingebracht ist und auf der vorzugsweise netzabgewandten Seite eine poröse PTFE-Folie auflaminiert. z.B. aufgewalzt, enthält. Realisieren lässt sich diese Zelle beispielsweise durch Verwendung einer Zink-/Luftzelle marktgängiger Konstruktion, wobei bei Ausschluss von Luft und Sauerstoff durch Schließung eines äußeren Stromkreises ein Stromfluss, der innerhalb der Zelle zur Entwicklung von Wasserstoff führt, erzeugt wird. Der Wasserstoff verlässt die Zelle durch ein Loch im Gehäuse.

Diese Konstruktion hat sich gut bewährt, wobei auch gegenüber dem eingangs genannten Stand der Technik der Bedarf danach entsteht, auf einfache Weise auch Zellen mit größerer Kapazität realisieren zu können, als sie marktgängige Zink-/Luftzellen aufweisen.

Die Lösung dieses Problems ist die Aufgabe der Erfindung.

Die Erfindung löst diese Aufgabe durch den Gegenstand des Anspruches 1,

Die Erfindung löst diese Aufgabe ferner durch das im Anspruch 7 angegebene Verfahren.

Die Verwendung eines inversen Aufbaus befreit von dadurch bisher auferlegten Beschränkungen.

Weitere vorteilhafte Ausgestaltungen der Erfindung sind den übrigen Unteransprüchen zu entnehmen.

Im Vergleich zu den herkömmlichen Link-/Luftzellen und den Gasentwicklungszellen nach bisheriger Bauart hat die neue Zelle beachtliche Vorteile. So wird der Deckel der herkömmlichen zelle mit dem Zinkpulver und dem Elektrolyten z. B. in Form eines Zinkgels gefüllt. Die Gaselektrode befindet sich im Becher auf dem Becherboden liegend, der zum Austausch des Gases ist der Umgebung ein Atmungsloch besitzt. Wegen dieser (inversen) Anordnung muss das Deckelteil bei der Montage der Zelle mit seinem flüssigen Inhalt um 180° gedreht werden, eine Maßnahme, die bei Zellen mit größerem Inhalt kaum sauber bewältigt werden kann. Auch bringt das Becherteil mit dem nach aufliegenden Gasclektroden-Element oft Probleme im Betrieb, besonders dann, wenn beim Verschließen der Zelle Verwerfungen im Randbereich der Elektrode aufgetreten sind.

Dagegen ist die Montage der erfindungsgemäßen Zelle nahezu problemlos auch bei großen Einheiten: Der Becher, der jetzt als Anodenteil fungiert, kann mit der erforderlichen Zink- und Elektrolytmenge, in welcher Form auch immer, gefüllt werden. Er bleibt in dieser Position. Das Kathodenelement wird ihm aufgesetzt und danach verschlossen.

Durch den optionalen Blechdom mit Atmungsloch, der die Gaskathode überwölbt, wird ein durch Abkleber verschließbaren Gasraum geschaffen, der der Umgebung der Zelle, mit der sie korrespondiert, vorgelagert ist. Auf diese Weise gelingt es, CO₂ und andere schädliche Gase vom Innern der Zelle fernzuhalten und die Wasserverluste an die Umgebung zu minimieren.

Auch der erfindungsgemäß ausgebildete Kragen ermöglicht neue Ausgestaltungen der mit diesen Zellen ausgestatteten Geräte, die damit sowohl gehaltert als auch kontaktiert werden können. Die vormontierte Kathodeneinheit mit Dichtring lässt sich einfach herstellen und lagern und dann als Gleichteil mit Anodenbechern verschiedener Tiefe aber konstanten Durchmessers kombinieren, um Zellen verschiedener (Gasentwicklungs-)Kapazität zu fertigen. Auf diese Weise lassen sich auf einfache Weise sowohl Batterien (insbesondere Zink-/Luftzellen) als auch Gasentwicklungszellen (insbesondere Wasserstoffentwicklungszellen) realisieren.

Nachfolgend wird die Erfindung unter Bezug auf die Zeichnung näher erläutert. Es zeigt:
- Fig. 1: einen Schnitt durch eine erfindungsgemäße Gasentwicklungszelle;
- Fig. 2: den Deckel vor der Montage der Kathodeneinheit;
- Fig. 3: den Anodenbecher vor der Montage.

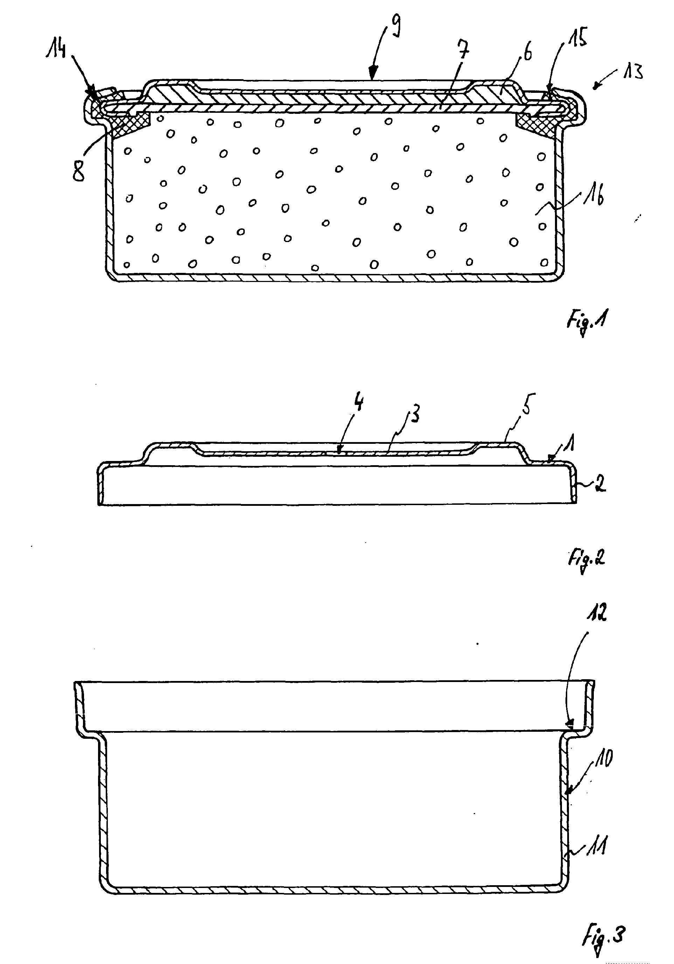

Der in Fig. 2 dargestellte Deckel 1, ein Tiefziehteil aus leitendem Metallblech, weist einen zylindrischen Abschnitt 2 und einen diesen an einem seiner Enden verschließenden Boden 3 auf, um dessen Mittelpunkt ein zentrisches Loch 4 ausgebildet ist, welches den Austritt von Gas aus der Gasentwicklungszelle erlaubt. Im Boden 3 ist ferner eine Ringnut 5 ausgebildet.

Bei der Montage werden in den Deckel 1 nacheinander ein das Gas zum Loch 4 leitender Nickelschaum (Ni-Foam) 6 (optional) - der die Ringnut 5 und den Boden 3 innerhalb der Ringnut 6 bedeckt - und eine an den Innendurchmesser des Deckels angepasste Kathodenscheibe 7 und ein Separator (hier nicht separat zu erkennen; z.B. eine scheibenförmige Gasdiffusionselektrode mit Separatorbeschichtung, siehe hierzu die DE 35 32 335 C2) eingelegt.

Sodann wird der zylindrische Abschnitt 2 radial nach innen hin umgeformt (umgebördelt) und es wird ein Isolier- oder Dichtring 8 aus einem isolierenden Material über den umgebördelten Bereich 14 gepresst, der an seiner Innenseite eine Nut 15 zur Aufnahme des umgebördelten Bereichs bzw. Kragens aufweist.

Derart wird eine vormontierte Kathodeneinheit 9 gefertigt.

Der Anodenbecher 10 ist ebenfalls als Tiefziehteil aus leitendem Metallblech ausgebildet und mit einem Anodenmaterial 16 wie Zinkgel befüllbar. Er weist einen zylindrischen Mantel 11 mit einer Tiefe T auf, wobei im zylindrischen Mantel eine Ringstufung 12 ausgebildet ist, die einen etwas größeren Innendurchmesser hat als der Außendurchmesser der vormontierten Kathodeneinheit, so daß diese von oben in den Anodenbecher einsteckbar ist.

Nach dem Einstecken der Kathodeneinheit wird der Rand des Anodenbechers 10 im Bereich oberhalb der Ringstufung 12 nach innen hin umgeformt (umgebördelt), so daß die Kathodeneinheit vom Anodenbecher eingefasst ist.

Die vormontierte Kathodeneinheit kann mit Anodenbechern 10 mit verschiedener Tiefe 10 zusammengesetzt werden, so daß auf einfache Weise unter einem hohen Gleichteileinsatz Gasentwicklungszellen verschiedenster Kapazität realisierbar sind.

Der Deckel 1 und der Anodenbecher 10 bilden zusammen mit dem Dichtring 8 das metallische Gehäuse 13 der Gasentwicklungszelle aus.

### Bezugszeichen

- Deckel: 1
- zylindrischer Abschnitt: 2
- Boden: 3
- Loch: 4
- Ringnut: 5
- Ni-Foam: 6
- Kathodenscheibe: 7
- Dichtring: 8
- Kathodeneinheit: 9
- Anodenbecher: 10
- Mantel: 11
- Ringstufung: 12
- Gehäuse: 13
- umgebördelter Bereich: 14
- Nut: 15
- Anodenmaterial: 16

## Patentansprüche

1. Gasentwicklungszette oder aus mehreren solchen bestehende Batterie mit einem Gehäuse, das einen Deckel (1), einen Anodenbecher(9) und einen Dichtring (8) ausweist und das wenigstens eine Anode, eine Kathode und einen Separator aufnimmt, wobei im Deckel (1) zumindest die Kathode und der Separator aufgenommen sind **dadurch** gekennzcichnet, daß der Deckel mit der Kathode und dem Separator und dem Dichtring (8) eine vormontierte Einheit zum Einsetzen in den Anodenbecher (9) bildet, wobei der Deckel (1) als Tiefzichteil aus Metallblech ausgebildet ist und einen radial nach innen hin umgeformten, umgebördeiten Bereich (14), der aus einem zylindrischen Abschnitt (2) umgeformt ist und einen diesen an einem seiner Enden verschließenden Boden (3) aufweist, wobei der Dichtring über den umgebördelten Bereich gepresst ist.

2. Gasentwicklungszelle nach Anspruch 1, **dadurch gekennzeichnet, daß** um den des Bodens ein zentrisches Loch (4) ausgebildet ist, welches den Austritt von Gas aus der Gasentwicklungszelle erlaubt.

3. Gasentwicklungszelle oder Batterie nach Anspruch 1 oder 2, **dadurch gekennzeichnet, daß** der Dichtring (8) an seiner Innenseite eine Nut (15) zur Aufnahme des umgebördelten Bereichs (14) ausweist.

4. Gasentwicklungszelle oder Batterie nach einem der vorstehenden Ansprüche, **dadurch gekennzeichnet, daß** der Anodenbecher (10) ebenfalls als Tiefziehteil aus Blech ausgebildet und mit einem Anodenmaterial (16) wie einem Zinkgel befüllt ist.

5. Gasentwicktungszelle oder Batterie nach einem der vorstehenden Ansprüche **dadurch gekennzeichnet, daß** der Anodenbecher (10) einen zylindrischen Mantel (11) aufweist, in dem eine Ringstufung (12) ausgebildet ist, die einen etwas größeren Innendurchmesser hat als der Außendurchmesser der vormontierten Einheit, so daß diese von oben in den Anodenbecher (9) einsteckbar ist, wobei der Rand des Anodenbechers (10) im Bereich obenhalb der Ringstufung (12) nach innen hin umgeformt ist, so daß die vormontierte Einheit vom Anodenbecher eingefasst ist.

6. Gasentwicklungszelle nach einem der vorstehenden Ansprüche, **dadurch gekennzeichnet, daß** in den Deckel (1)
a) ein das Gas zu einem Loch (4) leitender Nickelschaum (6), der eine Ringnut (5) und den Boden (3) innerhalb der Ringnut (5) bedeckt und
b) als Kathode eine an den Innendurchmesser des Deckels (1) angepasste Kathodenscheibe (7) mit Separatorbeschichtung eingelegt sind.

7. Verfahren zur Herstellung einer Gasentwicklungszelle nach einem der vorstehenden Ansprüche, **dadurch gekennzeichnet, dass** in den Deckel zumindest die Kathode und der Separator eingelegt werden und daß aus dem Deckel mit diesen Elementen und einem Dichtring (8) eine vormontierte Einheit zum Einsetzen in den Anoden becher (9) gebildet wird, wobei der Deckel (1) als Tiefziehteil aus Metallblech ausgebildet wird, wobei aus einem zylindrischen Abschnitt (2) ein radial nach innen hin umgeformter, umgebördelter Bereich (14) umgeformt wird und der Dichtring über den umgebördelten Bereich gepreßt wird.

## Claims

1. A gas generating cell, or a battery consisting of several such cells, comprising a housing which has a cover (1), an anode can (9) and a ring seal (8) and accommodates at least one anode, one cathode and one separator, with at least the cathode and the separator being accommodated in the cover (1), **characterized in that** the cover, together with the cathode and the separator and the ring seal (8), forms a pre-assembled unit for insertion in the anode can (9), with the cover (1) being formed as a deep-drawn part made of sheet metal and comprising a flanged region (14) which is formed radially to the inside from a cylindrical section (2) and comprises a floor (3) which seals it off at one of its ends, with the ring seal being pressed over the flanged region.

2. A gas generating cell according to claim 1, **characterized in that** a centric hole (4) is formed about the floor which allows the outlet of gas from the gas generating cell.

3. A gas generating cell or battery according to claim 1 or 2, **characterized in that** the ring seal (8) comprises a groove (15) on its inside for accommodating the flanged region (14).

4. A gas generating cell or battery according to one of the preceding claims, **characterized in that** the anode can (10) is also arranged as a deep-drawn part made of sheet and is filled with an anode material (16) such as a zinc gel.

5. A gas generating cell or battery according to one of the preceding claims, **characterized in that** the anode can (10) comprises a cylindrical jacket (11) in which an annular staggered portion (12) is formed which has a slightly larger inside diameter than the outside diameter of the pre-assembled unit, so that it can be inserted from above into the anode can (9), with the edge of the anode can (10) being formed inwardly in the region above the annular staggered portion (12), so that the pre-assembled unit is enclosed by the anode can.

6. A gas generating cell according to one of the preceding claims, **characterized in that** in the cover (1)
a) a nickel foam (6) is inserted which guides the gas to a hole (4) and which covers an annular groove (5) and the floor (3) within the annular groove (5), and
b) a cathode disk (7) with separator coating is inserted as a cathode, which cathode disk is adjusted to the inside diameter of the cover (1).

7. A method for producing a gas generating cell according to one of the preceding claims, **characterized in that** at least the cathode and the separator are placed in the cover and that a pre-assembled unit for insertion in the anode can (9) is formed from the cover with these elements and a ring seal (8), with the cover (1) being arranged as a deep-drawn part made of sheet metal, with a flanged region (14) which is formed radially to the inside being formed from a cylindrical section (2) and the ring seal is pressed over the flanged region.

## Revendications

1. Cellule de production de gaz ou batterie composée de plusieurs de ces cellules avec un boîtier présentant un couvercle (1), un boitîer de batterie d'anode (9) et un joint d'étanchéité (8) et contenant au moins une anode, une cathode et un séparateur, dans laquelle au moins la cathode et le séparateur sont logés dans le couvercle (1), **caractérisée en ce que** le couvercle forme avec la cathode et le séparateur et avec le joint d'étanchéité (8) une unité pré-assemblée à introduire dans le boitîer de batterie d'anode (9), le couvercle (1) étant conformé comme une pièce emboutie en tôle métallique et présentant une zone repliée (14) déformée dans le sens radial vers l'intérieur qui est déformée à partir d'une partie cylindrique (2) et présente un fond (3) fermant celle-ci à une de ses extrémités, le joint d'étanchéité étant pressé par-dessus la zone repliée.

2. Cellule de production de gaz selon la revendication 1, **caractérisée en ce qu'**un trou centré (4) permettant la sortie de gaz hors de la cellule de production de gaz est formé autour du milieu du fond.

3. Cellule de production de gaz ou batterie selon la revendication 1 ou 2, **caractérisée en ce que** le joint d'étanchéité (8) présente sur sa face intérieure une gorge (15) destinée à recevoir la zone repliée (14).

4. Cellule de production de gaz ou batterie selon l'une des revendications précédentes, **caractérisée en ce que** le boitîer de batterie d'anode (10) est également réalisé comme une pièce emboutie en tôle et est rempli d'un matériau anodique (16) tel qu'un gel au zinc.

5. Cellule de production de gaz ou batterie selon l'une des revendications précédentes, **caractérisée en ce que** le boitîer de batterie d'anode (10) présente une enveloppe cylindrique (11) dans laquelle est formé un gradin annulaire (12) ayant un diamètre intérieur légèrement plus grand que le diamètre extérieur de l'unité pré-assemblée, de sorte que celle-ci peut être enfoncée par le haut dans le boitîer de batterie d'anode (9), le bord du boitîer de batterie d'anode (10) étant déformé vers l'intérieur au-dessus du gradin annulaire (12) de telle façon que l'unité pré-assemblée est enserrée par le boitîer de batterie d'anode.

6. Cellule de production de gaz ou batterie selon l'une des revendications précédentes, **caractérisée en ce que** sont introduits dans le couvercle (1)
a) une mousse de nickel (6) amenant le gaz vers un trou (4), qui recouvre une gorge annulaire (5) et le fond (3) à l'intérieur de la gorge annulaire (5), et
b) pour servir de cathode, un disque de cathode (7) adapté au diamètre intérieur du couvercle (1) avec un revêtement séparateur.

7. Procédé pour la fabrication d'une cellule de production de gaz selon l'une des revendications précédentes, **caractérisé en ce qu'**au moins la cathode et le séparateur sont introduits dans le couvercle et **en ce qu'**une unité pré-assemblée à introduire dans le boitîer de batterie d'anode (9) est formée à partir du couvercle avec ces éléments et avec un joint d'étanchéité (8), le couvercle (1) étant conformé comme une pièce emboutie en tôle métallique, une zone repliée (14) déformée vers l'intérieur dans le sens radial étant déformée à partir d'une partie cylindrique (2) et le joint d'étanchéité étant pressé par-dessus la zone repliée.
